# EUROPÄISCHE PATENTSCHRIFT

(11) **EP 1 966 690 B1**
(45) Veröffentlichungstag und Bekanntmachung des Hinweises auf die Patenterteilung: **20.02.2019**
(21) Anmeldenummer: 06829866.0
(22) Anmeldetag: 22.12.2006
(51) Int. Cl.: G06F 9/4401

(54) **VERFAHREN ZUM INSTALLIEREN EINER HILFSEINHEIT AN EINEM COMPUTER**
METHOD FOR INSTALLING AN AUXILIARY UNIT ON A COMPUTER
PROCEDE PERMETTANT L'INSTALLATION D'UNE UNITE AUXILIAIRE SUR UN ORDINATEUR

(30) Priorität: 22.12.2005 DE 102005061662
(43) Veröffentlichungstag der Anmeldung: 10.09.2008
(73) Patentinhaber: Giesecke+Devrient Mobile Security GmbH, 81677 München (DE)
(72) Erfinder: GÖTZE, Frank, 81929 München (DE); HAAS, Bernd, 6167 Neustift (AT); BRANDL, Denny, 85386 Eching (DE); BIRMAN, Boris, 84034 Landshut (DE)
(86) Internationale Anmeldenummer: PCT/EP2006/012495
(87) Internationale Veröffentlichungsnummer: WO 2007/076984

(56) Entgegenhaltungen:
- EP-A1- 1 434 128
- EP-A2- 1 280 059
- WO-A-2004/008313
- US-A1- 2004 205 778
- US-A1- 2004 230 710
- "RELIABILITY, AVAILABILITY, SERVICABILITY DAEMON" IBM TECHNICAL DISCLOSURE BULLETIN, IBM CORP. NEW YORK, US, Bd. 34, Nr. 5, 1. Oktober 1991 (1991-10-01), Seiten 245-246, XP000189734 ISSN: 0018-8689

## Beschreibung

Die Erfindung geht aus von einem Verfahren nach der Gattung des Hauptanspruchs. Ein solches ist bekannt aus der WO 03/012577 A3. Darin wird ein Verfahren zum selbsttätigen Installieren einer Funktionseinheit an einen Host-Computer beschrieben, der zur Erkennung von bestimmten Massenspeichereinheiten eingerichtet ist. Verfahrensgemäß meldet sich die zu installierende Funktionseinheit zunächst als Standardmassenspeicher bei dem Host-Computer an. Sie verfügt hierzu über einen abschaltbaren Emulator, der im zunächst eingestellten Grundmodus eingeschaltet ist. Nach der Anmeldung als Massenspeicher veranlaßt die Funktionseinheit den Host-Computer dazu, ihr eine Datensequenz zu übermitteln, die Auskunft darüber gibt, ob die der Funktionseinheit entsprechenden Treiber und Konfigurationsmittel auf dem Host-Computer vorhanden sind. Ist das nicht der Fall veranlaßt die Funktionseinheit den Host-Computer weiter, ihr Informationen über das auf dem Host-Computer installierte Betriebssystem zu liefern. Entsprechend dem danach festgestellten Betriebssystem wählt die Funktionseinheit unter mehreren auf der Funktionseinheit gespeicherten Treibern und Konfigurationsmitteln geeignete aus und übermittelt sie dem Host-Computer. Nach Installation der übermittelten Treiber und Konfigurationsmittel wird die Funktionseinheit in einen funktionseinheitsspezifischen Betriebsmodus geschaltet und die Installation abgeschlossen.

Das bekannte Verfahren ermöglicht die Installation einer Funktionseinheit an einem Host-Computer, der für die Funktionseinheit zunächst nicht vorbereitet ist und nicht über die zum Betrieb der Funktionseinheit notwendigen Treiber und Konfigurationsmittel verfügt. Es setzt allerdings voraus, daß die Funktionseinheit während der Installationsphase gegenüber dem Host-Computer zumindest teilweise als aktive Komponente agiert. Das Verfahren eignet sich deshalb nicht in streng nach dem "Master-Slave-Prinzip" eingerichteten Anordnungen, in denen der Host-Computer stets als Master agiert. Schwierig ist zudem die Realisierung der für die Treiberauswahl vorgesehenen Übermittlung von Informationen über den Host-Computer an die Funktionseinheit. Eine solche Übermittlung kann durch die Simulation von manuellen Eingaben durch einen Nutzer simuliert werden. Dies birgt aber die Gefahr, daß bei Nutzereingaben während der Installationsphase Fehler auftreten.

Aus der WO 2004/008313 A1 ist ein Verfahren zur Einrichtung einer Kooperation zwischen einem Host-Computer und einer Funktionseinheit bekannt, die im Rahmen einer auf dem Host-Computer ausgeführten Anwendung eine Teilfunktion ausführt. Um dem Host-Computer die auf der Funktionseinheit zur Verfügung stehenden Teilfunktionen bekannt zu machen, meldet sich die Funktionseinheit zunächst in einer ersten Konfiguration als Standardmassenspeicher an und übermittelt dem Host-Computer Informationen über unterstützte Standardanwendungen. Eine der Standardanwendungen ist dazu eingerichtet, die weiteren auf der Funktionseinheit vorhandenen Teilfunktionen festzustellen. Desweiteren teilt der Host-Computer der Funktionseinheit das benutzte Betriebssystem mit. Aus den Angaben ermittelt die Funktionseinheit die für die möglichen Anwendungen zu aktivierenden Teilfunktionen und die zu deren Ausführung auf dem Host-Computer benötigten Betriebsroutinen. Anschließend wird die Funktionseinheit neu gestartet. Sie meldet sich beim Host-Computer nun mit einer erweiterten zweiten Konfiguration an, die die Standardfunktionen sowie zusätzlich die jetzt aktivierten Teilfunktionen umfaßt. Weiterhin werden die benötigten Betriebsroutinen an den Host-Computer übertragen. Die Umstellung der Hilfseinheit von der ersten auf die zweite Konfiguration erfolgt mit Hilfe eines Flags. Einer schnellen Umsetzung des Verfahrens, insbesondere, wie vorgeschlagen, für USB Smart Cards, steht entgegen, daß die vorgeschlagene Feststellung der zur Verfügung stehenden Teilfunktionen durch eine Standaranwendung und ebenso die Mitteilung des benutzten Betriebssystems nicht ohne weiteres mit dem USB-Standard vereinbar sind. Desweiteren birgt die Anmeldung der Hilfseinheit in einer zusammengesetzten Konfiguration die Gefahr, daß von einem Host-Computer nur die formal zuerst bezeichnete akzeptiert wird.

In der US 2004/0230710 A1 wird die selbsttätige Installation einer Hilfseinheit an einen Host-Computer beschrieben. Die Hilfseinheit gibt sich zunächst als "mass storage device" aus. Der Host-Computer greift zuerst auf die in der Hilfseinheit gespeicherte "autorun.inf." -Datei zu und führt die darin enthaltenen Anweisungen aus. Durch die Anweisungen wird der Host-Computer veranlaßt, von der Hilfseinheit die für deren Funktion benötigten Treiber zu laden. Nach Installation der Treiber arbeitet die Hilfseinheit in ihren nativen Betriebsmodus. Die "autorun.inf."-Datei kann auch Anweisungen enthalten, die den Host-Computer veranlassen, vor dem Laden eines Treibers zu prüfen, ob der Treiber auf dem Host-Computer bereits vorhanden ist. Die Steuerung der Installation liegt bei dieser bekannten Lösung vollständig in der "autorun.inf."-Datei. Die Zuverlässigkeit der Lösung hängt entsprechend davon ab, daß die in der"autorun.inf."-Datei enthaltenen Anweisungen von dem jeweiligen Host-Computer richtig umgesetzt werden können.

Aus dem IBM Technical Disclosure Bulletin, Bd. 34, Nr. 5, 01.10.1991, S. 245 bis 246 ist es bekannt, für UNIX-Systeme die Verwendung von Hintergrundprozessen, sogenannten "Dämonen" vorzusehen, die es insbesondere Treibern und Kern-Erweiterungen erlauben, die Ausführung von Abläufen zu initiieren, die auf System- und Anwendungsebene angesiedelt sind. Üblicherweise haben Treiber und Kernerweiterungen keinen Zugriff auf derartige Dienste und sind auf einen Betrieb im Interrupt-Level beschränkt. Die vorgeschlagenen "Dämonen" sind grundsätzlich inaktiv und befinden sich in einem Ruhezustand. Erst auf ein spezielles Wecksignal von einem Treiber hin wird ein "Dämon" aktiv und führt eine bestimmte, durch den Treiber selbst nicht ausführbare Aufgabe aus. Die Aufgabe kann z.B. darin bestehen, Code nachzuladen, wenn festgestellt wurde, daß der vorhandene Code beschädigt ist.

Aus der US 2004/0205778 A1 ist ein System zur Installation einer Hilfseinheit und zugehöriger Treiber an einem Computer bekannt.

Aus der EP 1434128 A1 ist ein Verfahren zur "plug-and-play"-Verbindung einer Hilfseinheit an einen Host bekannt. Der Host führt dabei eine Autokonfiguration durch, um die Verbindung zu ermöglichen..

WO 2004/008313 A offenbart ein USB-Gerät, insbesondere in Form einer Chipkarte, das sich in einem hilfseinheitenspezifischen Modus gegenüber einem Host mittels Deskriptoren als USB-Gerät ausgeben kann, und in einem Grundmodus als "Mass Storage Device".

Aufgabe der Erfindung ist es, ein Verfahren zum selbsttätigen Installieren einer Hilfseinheit an einen Host-Computer anzugeben, das möglichst wenig davon abhängig ist, daß auf der Hilfseinheit auf den Host-Computer abgestimmte Steueranweisungen hinterlegt sind.

Diese Aufgabe wird gelöst durch ein Verfahren mit den Merkmalen des Hauptanspruchs. Das erfindungsgemäße Verfahren erlaubt die selbsttätige Installation einer Hilfseinheit an einen dazu noch nicht vorbereiteten Host-Computer, ohne daß der Host-Computer Daten an die Hilfseinheit übermitteln muß. Das Verfahren kommt insbesondere ohne Simulation von manuel len Eingaben eines Nutzers aus. Ein besonderer Vorteil des Verfahrens ist, daß ein einmal installierter Hintergrundprozeß anschließend eine beschleunigte Installation einer Vielzahl unterschiedlicher Hilfseinheiten erlaubt. Das Verfahren läßt sich weiterhin vorteilhaft auf beliebigen Host-Computern installieren, ohne daß dazu Änderungen an der Hard- oder in der Software erforderlich wären.

Das erfindungsgemäße Verfahren eignet sich besonders für Hilfseinheiten mit USB-Schnittstelle.

Unter Bezugnahme auf die Zeichnung wird nachfolgend ein Ausführungsbeispiel der Erfindung näher beschrieben.

Es zeigen:
- Fig. 1: die Struktur einer Anordnung aus Host-Computer und Hilfseinheit,
- Fig. 2 und 3: ein Flußdiagramm des Ablaufs einer Installation einer Hilfseinheit,
- Fig. 4 bis 6: den Ablauf von aufeinanderfolgenden Inbetriebnahmen von unterschiedlichen Hilfseinheiten an einem Computer.

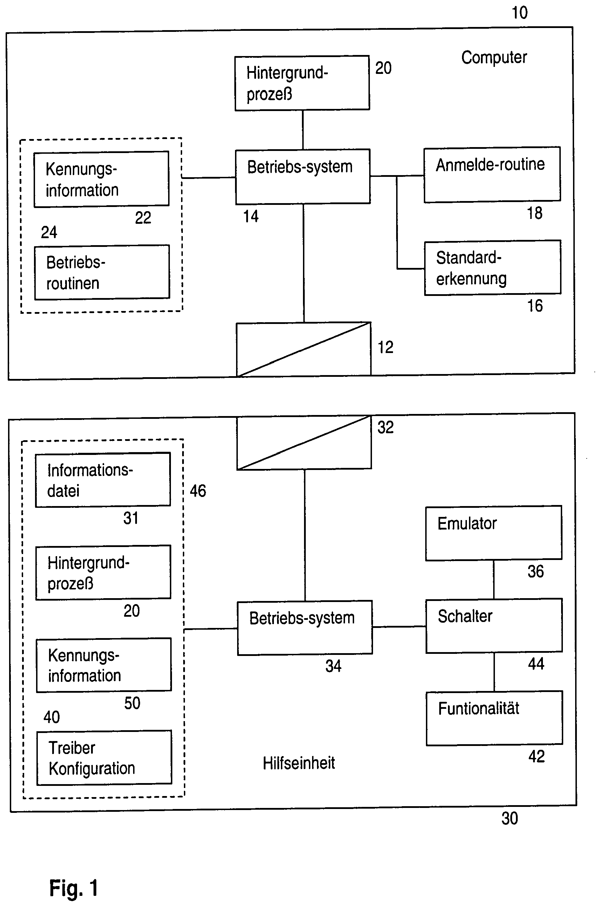

Fig. 1 zeigt eine Anordnung mit einem Host-Computer 10 und einer Hilfseinheit 30 mit den jeweils für die vorliegende Erfindung wesentlichen Elementen ihrer internen Struktur.

Der im folgenden einfach als Computer bezeichnete Host-Computer 10 ist eine übliche Datenverarbeitungsanlage mit einer zentralen Prozessoreinheit, mehreren Speichern, einer Mensch-Maschine-Schnittstelle sowie wenigstens einer Schnittstelle 12 zum Anschluß einer Hilfseinheit 30. Praktisch kann der Computer 10 beispielsweise ein im privaten Bereich befindlicher PC, ein für die Öffentlichkeit zugängliches Terminal, etwa ein Bankterminal oder ein Endgerät eines Computernetzes sein. Der Computer 10 läuft unter der Steuerung eines Betriebssystems 14, das mittels einer Standarderkennung 16 dazu eingerichtet ist, neu an die Schnittstelle 12 angeschlossene Hilfseinheiten 30 automatisch zu erkennen. Bestandteil des Betriebssystems 14 ist eine Anmelderoutine 18, die nach Erkennen des Anschlusses einer neuen Hilfseinheit 30 an die Schnittstelle 12 bestimmte Inbetriebnahme-Programmroutinen zur Ausführung bringt. Dem Betriebssystem 14 sind weiterhin ein Hintergrundprozeß 20, eine Liste 22 mit bekannten Hilfseinheitenkennungen sowie ein Speicher 24 mit zum Betrieb der Hilfseinheit benötigten Betriebsroutinen, hilfseinheitsspezifischen Treibern und Konfigurationseinstellungen zugeordnet. Die Betriebsroutinen im Speicher 24 korrespondieren zu den in der Liste 22 gespeicherten Kennungen, was durch die Umrandung angedeutet wird. Die Elemente 20, 22, 24 bzw. deren Ausführung bilden zusammen den Kern einer speziell zur Inbetriebnahme von Hilfseinheiten 30, die nicht durch die Standarderkennung 16 in Betrieb genommen werden können, geeignete Inbetriebnahmeroutine. Alle genannten logischen Elemente des Computers 10 sind in üblicher Weise in der Hard- und Softwarestruktur des Computers 10 realisiert. Die hier nur zur Unterstützung der Beschreibung gewählte logische Trennung muß sich dabei in der praktischen Realisierung nicht widerspiegeln.

Die Hilfseinheit 30 ist typischerweise ein ressourcenbeschränkter Computer mit einem Mikrocontroller, Speichermitteln sowie eventuell Bedienungselementen und besitzt zum Beispiel die Gestalt einer Chipkarte oder eines USB-Tokens. Die Hilfseinheit 30 ist in zwei Betriebsmoden betreibbar, einem Grundmodus und einem hilfseinheitsspezifischen Betriebsmodus. Im hilfseinheitsspezifischen Betriebsmodus stellt sie dem Computer 10 eine eigentümliche Funktionalität 42 zur Verfügung, die in der Regel auf dem Computer 10 nicht vorhanden ist. Die Hilfseinheit 30 arbeitet unter der Steuerung eines hilfseinheitsspezifischen Betriebssystems 14, das mit einem zur Umschaltung zwischen den beiden Betriebsmoden dienenden Modusschalter 44 und der Schnittstelle 32 verbunden ist. Zur Realisierung des Grundmodus ist der Modusschalter 44 mit einem Emulator 36 verbunden, der dazu dient, die Hilfseinheit 30 als Gerät von einem vorbestimmten Typ bei einem Computer 10 anzumelden. In einem Speicherbereich 46 sind ein Hintergrundprozeß 20, Treiber und Konfigurationseinstellungen 40 zum Betrieb der Hilfseinheit 30 sowie eine Kennungsinformation 50 gespeichert. Alle genannten logischen Elemente sind in üblicher Weise in der Hardwarestruktur der Hilfseinheit 30 realisiert bzw. als Softwaremodule auf der Hilfseinheit 30 gespeichert. Die hier nur zur Unterstützung der Beschreibung gewählte logische Trennung muß sich nicht in der Hardware-Realisierung widerspiegeln.

Computer 10 und Hilfseinheit 30 arbeiten nach dem "Master-Slave"-Prinzip zusammen, wobei der Computer 10 als Master, die Hilfseinheit 30 als Slave agiert. Gemäß diesem Master-Slave-Prinzip sendet stets der Computer 10 Kommandos an die Hilfseinheit 30, auf welche diese antwortet.

Das Betriebssystem 14 des Computers 10 ist von einem üblichen Typ. Insbesondere kann es sich um das Quasi-Standardbetriebssystem WINDOWS® der Fa. MICROSOFT handeln. Die Schnittstelle 12 kann etwa eine USB-Schnittstelle, eine FIREWIRE®-Schnittstelle oder eine beliebige andere standardisierte Schnittstelle sein. Die Standarderkennung 16 ist eine Grundfunktion des Computers 10, die es erlaubt an die Schnittstelle 12 neu angeschlossene Hilfseinheiten 30 bestimmter Standardtypen in Betrieb zu nehmen und in den Betrieb des Computers 10 einzubinden. Bei Erkennen des Anschlusses einer neuen Hilfseinheit 30 veranlaßt die Standarderkennung 16 das Betriebssystem 14 zur Ausführung der Anmelderoutine 18, welche vorzugsweise automatisch ausgeführt wird und bewirkt, daß die Hilfseinheit 30 selbsttätig in Betrieb genommen wird. Das Konzept ist unter anderem als "Plug & Play" bekannt und häufig etwa auf PCs mit USB-Schnittstelle realisiert, die neu an den PC angeschlossenen USB-Einheiten unmittelbar erkennen und in Betrieb nehmen. Die Anmelderoutine 18 ist ebenfalls von üblichem Typ. Unter WINDOWS ist sie etwa als "autorun"-Routine bekannt. Sie veranlaßt das Betriebssystem 14 bei Erhalt eines entsprechenden Steuersignales dazu bestimmte, vorab festgelegte Programmroutinen zur Inbetriebnahme einer neuen Hardwareeinheit auszuführen; unter WINDOWS wird etwa typischerweise ein ausführbares Programm gestartet.

Bei dem Hintergrundprozeß 20 handelt es sich um eine selbständig dauerhaft im Hintergrund laufende Programmroutine, die keine Benutzereingaben erfordert und keine Ressourcen bindet. Sofern er vorhanden ist, wird der Hintergrundprozeß 20 mit dem Starten des Computers 10 gestartet. Funktion des Hintergrundprozesses 20 ist es, neu an die Schnittstelle 12 angeschlossene Hilfseinheiten 30 zu erkennen und ihre Inbetriebnahme zu veranlassen. Der Hintergrundprozeß 20 ist nicht hilfseinheitsspezifisch. Er reagiert auf Ereignissignale, die vom Betriebssystem 14 abgesetzt werden und erlaubt die Erkennung von unterschiedlichen Hilfseinheiten 30.

In der Liste 22 sind Kennungen 50 von Hilfseinheiten 30 abgelegt, die aktuell an den Computer 10 angeschlossen sind oder zu früheren Zeitpunkten an den Computer 10 angeschlossenen wurden. Die Kennungen 50 können unter WINDOWS die Form von Laufwerksnamen (*Volumen-ID*) haben, die von den Hilfseinheiten 30 selbst angegeben wurden, nachdem ihnen durch die Standarderkennung 16 des Betriebssystems 14 zunächst ein Laufwerksbuchstabe zugewiesen wurde.

In dem Speicher 24 sind korrespondierend zu den Kennungen 50 in der Liste 22 Betriebsroutinen gespeichert, die zum Betrieb der Hilfseinheiten 30 benötigt werden. Die Betriebsroutinen umfassen insbesondere Treiber, Konfigurationseinstellungen sowie ähnliche Routinen für die jeweiligen Hilfseinheiten 30.

Liste 22 und Speicher 24 sind in der Regel unbesetzt oder fehlen, solange auf dem Computer 10 noch kein Hintergrundprozeß 20 existiert.

Die Hilfseinheit 30 besitzt ein eigenständiges Betriebssystem 34, das zumindest eine für die Hilfseinheit 30 eigentümliche Funktionalität 42 realisiert. Die Hilfseinheit 30 kann beispielsweise eine Chipkarte mit der Funktionalität eines Mini-Webservers sein, der via USB-Schnittstelle über ein TCP/IP-Protokoll angesprochen wird.

Der Emulator 36 dient dazu, die Hilfseinheit 30 bei Neuanschluß an einen Computer 10 zunächst gegenüber dem Computer 10 als Standardeinheit auszugeben, die von der im Computer 10 vorhandenen Standarderkennung 16 in Betrieb genommen werden kann. Gegenüber einem Computer 10 mit dem Betriebssystem WINDOWS kann der Emulator 36 eine Hilfseinheit 30 beispielsweise als "Memory-Stick" oder allgemein als StandardMassenspeichereinheit ausgeben.

In dem Speicherbereich 46 der Hilfseinheit 30 ist ein Hintergrundprozeß 20 gespeichert, der nach Übertragung an einen Computer 10 diesen dazu einrichtet, zukünftig Hilfseinheiten 30 zu erkennen und die zum Betrieb einer Hilfseinheit 30 benötigten Betriebsroutinen, d.h. die entsprechenden Treiber und Konfigurationseinstellungen bereitzustellen oder zu laden. Der im Speicher 48 abgelegte Hintergrundprozeß 20 ist auf das Betriebssystem 14 von Computern 10 abgestimmt, an die die Hilfseinheit 30 anschließbar ist. Er ist zweckmäßig identisch in allen Hilfseinheiten 30 gespeichert, die an Computer 10 mit einem Betriebssystem 14 desselben Typs anschließbar sind.

In dem Speicherbereich 46 der Hilfseinheit 30 befindet sich weiter eine Informationsdatei 31, auf die eine Anmelderoutine 18 bzw. das Betriebssystem 14 eines Computers 10 nach dem Anschluß der Hilfseinheit 30 an einen Computer 10 standardmäßig zuerst zugreifen. Ist die Hilfseinheit 30 an ein WINDOWS Betriebssystem angepaßt, ist die Informationsdatei 31 beispielsweise die Datei "autorun.inf". In der Informationsdatei 31 liegt ein Installationsprogramm, das nach Übertragung an einem Computer 10 von diesem ausgeführt werden kann, um Übertragung und Installation von Daten, vor allem des Hintergrundprozesses und der Betriebsroutinen, zur Einrichtung des Computers 10 auf eine Hilfseinheit 30 zu bewirken.

In dem Speicher 46 sind weiter zum Betrieb der Hilfseinheit 30 über den Computer 10 benötigte Treiber und Konfigurationseinstellungen 40 abgelegt, die dazu bestimmt sind an einen Computer 10 übertragen zu werden. Die im Speicher 40 abgelegten Treiber und Konfigurationseinstellungen sind spezifisch für den Typ der Hilfseinheit 30.

Der Speicher 50 enthält weiter eine für die Hilfseinheit 30 spezifische Kennungsinformation (*Volumen-ID*), die auf Anforderung durch den Computer 10 an diesen übermittelt wird. Desweiteren enthält der Speicher 50 zweckmäßig Grundinformationen zur genauen Bezeichnung der Hilfseinheit 30, zur technischen Beschaffenheit sowie Routinginformationen zur Durchführung der Anmelderoutine 18.

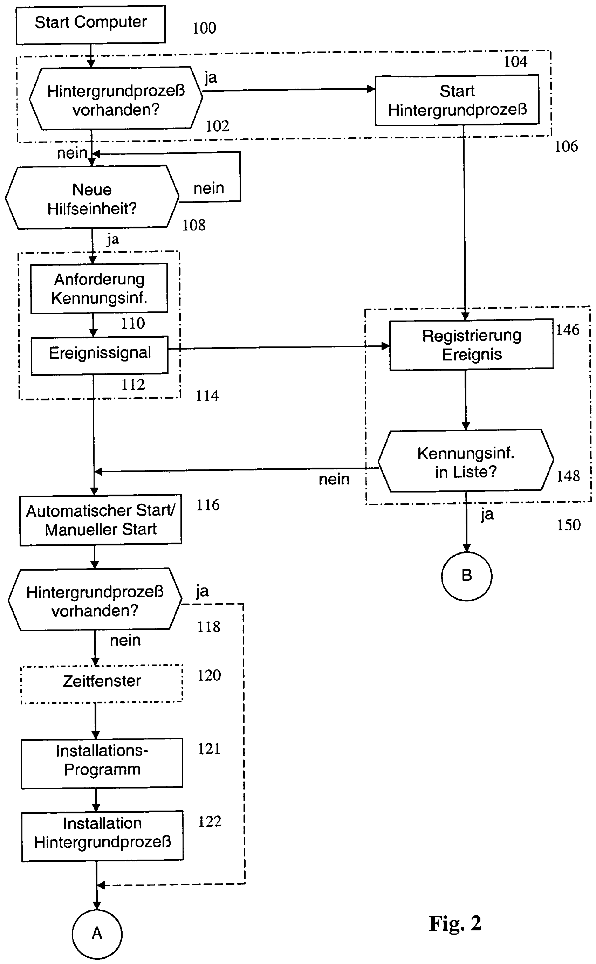

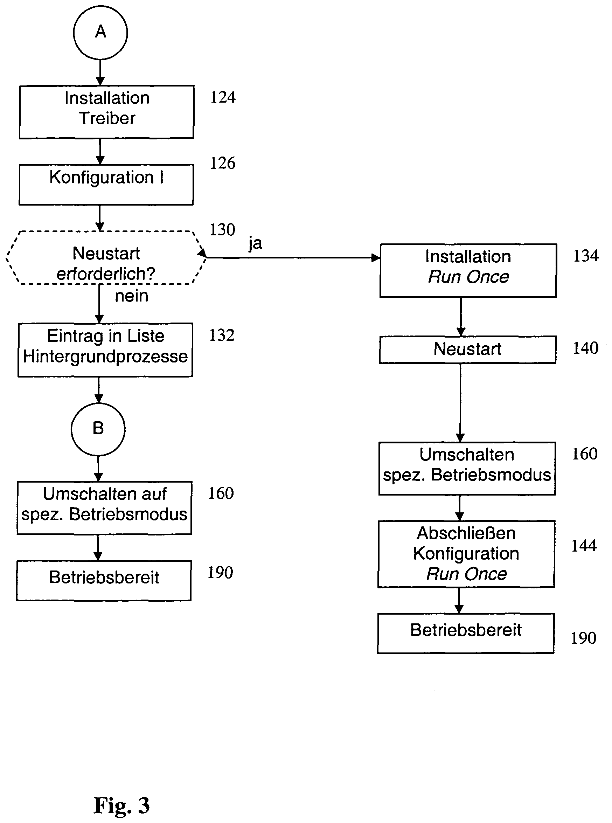

In den Fig. 2 und 3 ist der Ablauf der Inbetriebnahme einer neu an einen Computer 10 angeschlossenen Hilfseinheit 30 veranschaulicht. Dabei wird angenommen, daß der Computer 10 unter dem Betriebssystem WINDOWS läuft und die Hilfseinheit 30 ein tragbarer Datenträger nach Art einer Chipkarte ist, wobei die Schnittstellen 12 und 32 als USB-Schnittstelle ausgebildet sind.

Der Inbetriebnahmevorgang setzt ein mit dem Start des Computers 10, Schritt 100. Sofern vorhanden, wird mit dem Start des Computers 10 zugleich auch ein Hintergrundprozeß 20 gestartet, Schritt 106. Der Start des Hintergrundprozesses 20 kann, wie in Fig. 2 angedeutet, erfolgen, indem das Betriebssystem 14 zu einem geeigneten Zeitpunkt nach dem Start des Computers 10 prüft, ob ein Hintergrundprozeß 20 vorhanden ist, Schritt 102, und, falls dies der Fall ist, ihn anschließend, Schritt 104, startet.

Unabhängig davon, ob ein Hintergrundprozeß gestartet wurde, ist der Computer 10 nach dem Start zum Anschluß einer Hilfseinheit 30 bereit. Diese Bereitschaft ist in Fig. 2 durch eine Warteschleife 108 angedeutet, in der der Computer 10 prüft, ob an die Schnittstelle 12 eine Hilfseinheit 30 angeschlossen wurde.

Wird nun an die Schnittstelle 12 eine neue Hilfseinheit 30 angeschlossen, reagiert die Standarderkennung 16 des Computers 10. Sie stellt den Typ der angeschlossenen Hilfseinheit 30 fest und ordnet diesem eine Typidentifikation, unter WINDOWS etwa einen Laufwerksbuchstaben, zu. Auf Seiten der Hilfseinheit 30 ist beim Anschluß an den Computer 10 zunächst der Grundmodus eingestellt und damit der Emulator 36 eingeschaltet. Dieser gibt die Hilfseinheit 30 als Standardeinheit, etwa als Standardmassenspeichereinheit aus. Das Betriebssystem 14 identifiziert die Hilfseinheit 30 entsprechend als Standardeinheit und legt sie als übliche Standardeinheit mit zugehöriger Typidentifikation an.

Weiter veranlaßt die Standarderkennung 16 das Betriebssystem 14 zur Durchführung einer internen Standardidentifikation, Schritt 114, die in zwei Teilschritten 110, 112 erfolgt. Im ersten Teilschritt 110 veranlaßt das Betriebssystem 14 die Hilfseinheit 30 zur Übermittlung einer spezifischen Kennungsinformation 50 - unter WINDOWS etwa die sogenannte *Volumen ID* -, und ordnet sie der Typidentifikation als Name für die neu angeschlossenen Hilfseinheit 30 zu. Den Namen speichert das Betriebssystem 14 in der Liste 22. Zusammen mit der spezifischen Kennungsinformation fordert das Betriebssystem 14 zweckmäßig zugleich weitere Grundinformationen an, etwa Informationen zur genauen Bezeichnung der Hilfseinheit 30 wie Hersteller oder Seriennummer, zur technischen Beschaffenheit, etwa eine USB-Klasse oder Deskriptoren zur Beschreibung einer USB-Struktur, oder Routinginformationen zur Durchführung der Anmelderoutine 18.

Sind die Kennungsinformation 50 und die Grundinformationen von der Hilfseinheit 30 eingegangen, erzeugt der Computer 10 im zweiten Teilschritt 112 ein Ereignissignal, welches, sofern vorhanden, von dem Hintergrundprozeß 20 erkannt wird.

Der weitere Fortgang des Inbetriebnahmevorganges hängt davon ab, ob auf dem Computer 10 ein Hintergrundprozeß 20 bereits vorhanden und die Ausführung einer Inbetriebnahmeroutine 28 damit möglich ist oder nicht. Im folgenden wird zunächst unterstellt, daß ein solcher Hintergrundprozeß 20 nicht vorhanden ist.

Die Standarderkennung 16 veranlaßt in diesem Fall das Betriebssystem 14 zum Start der Ausführung der Anmelderoutine 18, Schritt 116. Der Start erfolgt vorzugsweise automatisch, wenn die Einstellung des Betriebssystems 14 dies zuläßt. Ist die Anmelderoutine 18 nicht unmittelbar durch automatischen Start ausführbar, erwartet das Betriebssystem 14 die Ausführung eines manuellen Starts durch einen Nutzer.

Sodann prüft das Betriebssystem 14, ob ein Hintergrundprozeß 20 vorhanden ist, Schritt 118. Für die Feststellung des Ansprechens eines Hintergrundprozesses 20 kann ein Zeitfenster vorgesehen sein. Ist das der Fall, prüft das Betriebssystem 14 in einem Schritt 120, ob das Zeitfenster überschritten wurde. Wird es ereignislos überschritten, ist ein Hintergrundprozeß 20 auf dem Computer 10 nicht vorhanden.

Ist ein Hintergrundprozeß 20 vorhanden, kann zweckmäßig vorgesehen sein, daß zunächst Schritt 148 ausgeführt und geprüft wird, ob die Kennungsinformation 50 in der Liste 22 enthalten ist, Schritt 148. Der Zwischenschritt empfiehlt sich insbesondere, wenn die Möglichkeit besteht, daß die Anmelderoutine 18 bereits vor Auswertung eines möglicherweise erzeugten Ereignissignals in Schritt 112 gestartet wird. Ist die Kennungsinformation nicht in der Liste 22, wird der Ablauf mit Schritt 124 fortgesetzt.

Bei festgestelltem Fehlen eines Hintergrundprozesses wird durch die Anmelderoutine 18 ein Installationsprogramm aktiviert, das bewirkt, daß auf der Hilfseinheit 30 vorhandene Daten ausgelesen, an den Computer 10 übertragen und dort installiert werden, um den Computer 10 auf die Hilfseinheit 30 einzurichten. Das Installationsprogramm befindet sich zweckmäßig in der speziell zu diesem Zweck bereitgehaltenen Informationsdatei 31 im Speicher 46 der Hilfseinheit 30. Von dort wird es von der Anmelderoutine 18 ausgelesen, an den Computer 10 übertragen und auf dem Computer 10 ausführt, Schritt 121. Im Rahmen seiner Ausführung bewirkt das Installationsprogramm die Übermittlung eines Steuersignales an die Hilfseinheit 30, das die Übermittlung der zu installierenden Daten auslöst.

Auf das Steuersignal hin überträgt die Hilfseinheit 30 aus ihrem Speicher 46 zunächst den darin abgelegten Hintergrundprozeß 20 an den Computer 10. Der Hintergrundprozeß wird zweckmäßig sofort auf dem Computer 10 installiert, Schritt 122. Desweiteren überträgt die Hilfseinheit 30 auf das Steuersignal hin aus ihrem Speicher 40 Daten zur Einrichtung einer hilfseinheitsspezifischen Betriebsroutine im Speicher 24 des Computers 10, Schritt 124. Übertragen werden hierzu zunächst hilfseinheitsspezifische Treiber, die zweckmäßig ebenfalls unmittelbar auf dem Computer 10 installiert werden. Weiter überträgt die Hilfseinheit 30 dem Computer 10 Konfigurationseinstellungen 10, Schritt 126. Diese werden, soweit das unmittelbar möglich ist, ebenfalls sofort installiert.

Übertragung und Installation der Daten im Computer 10 können in einer zweckmäßigen Variante auch derart erfolgen, daß das Installationsprogramm zunächst alle Daten auf den Computer 10 überträgt - und dort beispielsweise in ein temporäres Verzeichnis kopiert. Anschließend erfolgt dann en bloc die Installation von Hintergrundprozeß 20, Betriebsroutinen 40 und Konfigurationseinstellungen 10. Entsprechend der Aufgabenteilung kann das Installationsprogramm dabei aus einer Starterkomponente bestehen, die die Übertragung der Daten auf den Computer 10 bewirkt, und einer von der Starterkomponente aufgerufenen Konfigurationskomponente, die die Installation der übertragenen Daten vornimmt.

Zweckmäßig beinhaltet das Installationsprogramm ferner eine unmittelbar nach dem Start des Installationsprogrammes ausgeführte Prüfung auf Vorhandensein eines Hintergrundprozesses. Wird ein Hintergrundprozeß erkannt, werden die Anmelderoutine 18 bzw. das Installationsprogramm abgebrochen.

Abhängig vor allem vom Typ der Hilfseinheit 30 und von der Einrichtung des Betriebsystems 14 kann erforderlich sein, daß die Hilfseinheit 30 zum Abschließen der Vornahme der Konfigurationseinstellungen neu gestartet werden muß, um nach einem Neustart Schritte zum Abschluß der Installation von Treibern und Konfigurationseinstellungen durchzuführen, die erst nach Umschaltung der Hilfseinheit 30 in den hilfseinheitsspezifischen Betriebsmodus eingestellt werden können. Diese Schritte werden, wie nachfolgend noch erläutert wird, zu einem späteren Zeitpunkt ausgeführt.

Falls ein Neustart nicht erforderlich ist, trägt das Betriebssystem 14 die Kennungsinformation 50 in die dem Hintergrundprozeß 20 zugeordnete Liste 22 ein, Schritt 132. Anschließend bewirkt das Installationsprogramm das Absenden eines Steuersignals an die Hilfseinheit 30, welches deren Betriebssystem 34 veranlaßt, den auf der Hilfseinheit 30 befindlichen Modusschalter 44 umzustellen auf den hilfseinheitsspezifischen Betriebsmodus, in dem die für die Hilfseinheit 30 eigentümliche Funktionalität 42 ausgeführt wird, Schritt 160. Als Steuersignal dient vorzugsweise ein im Grundmodus gültiges Standardkommando, mit dem die Hilfseinheit 30 von dem Computer 10 logisch getrennt wird. Entspricht der Grundmodus einer Massenspeichereinheit, kommt als Steuersignal etwa der Befehl EJECT bzw. das SCSI-Kommando PREVENT_ALLOW_MEDIUM_REMOVAL in Betracht. Auf das Steuersignal beendet die Hilfseinheit 30 den Grundmodus und schaltet sich in den hilfseinheitenspezifischen Betriebsmodus. Nachdem der Computer 10 zuvor durch Installation von hilfseinheitsspezifischen Treibern und Konfigurationseinstellungen 10 entsprechend eingerichtet wurde, erkennt er nun unmittelbar den hilfseinheitenspezifischen Betriebsmodus.

Anschließend ist das aus Computer 10 und Hilfseinheit 30 gebildete System betriebsbereit zur Ausführung der für die Hilfseinheit 30 eigentümlichen Funktionalität unter Steuerung der nun im Computer 10 installierten Betriebsroutinen, Schritt 190.

Ergibt sich in Schritt 130, daß ein Neustart erforderlich ist, wird die Hilfseinheit 30 erneut gestartet, Schritt 140. Die nachfolgend auszuführende Neustartroutine ist vorzugsweise so angelegt, daß ein Neustart nur genau einmal ausgeführt wird. Hierzu wird, zweckmäßig bei der Durchführung des ersten Teils der Konfiguration in Schritt 126, eine besondere Neustartkonfiguration (*Run Once*-Konfiguration) installiert, Schritt 134, die eine genau einmalige Ausführung der Neustartroutine festlegt.

Der Neustart erfolgt, indem das Installationsprogramm der Hilfseinheit 30 ein Steuersignal sendet, Schritt 140, das die Umschaltung des Modusschalters 44 der Hilfseinheit 20 auf den hilfseinheitsspezifischen Betriebsmodus bewirkt, Schritt 160.

Im folgenden Schritt 144 schließt das Betriebssystem 14 - im hilfseinheitenspezifischen Betriebsmodus - dann die Konfiguration des Computers 10 gemäß der Vorgabe durch die *Run Once-*Konfiguration ab. Dabei nimmt es Konfigurationseinstellungen vor, die im Schritt 126 noch nicht unmittelbar ausgeführt werden konnten. Nach Abschluß der Einrichtung der Konfigurationseinstellungen setzt das Betriebssystem 14 die *Run Once*-Konfiguration zurück.

Das aus Computer 10 und Hilfseinheit 30 gebildete System ist danach betriebsbereit, Schritt 190.

Ergibt die Prüfung in einem nach einem Neustart ausgeführten Schritt 150, daß die Kennungsinformation 50 dem Hintergrundprozeß 20 nicht bekannt ist, veranlaßt dieser das Betriebssystem 14 zum Start der Ausführung der Anmelderoutine 18 durch Ausführung der Schritte 116 ff.

Nachfolgend wird der Fall erläutert, daß ein Hintergrundprozeß 20 bei Start des Computers 10 in Schritt 100 bzw. bei Neustart der Hilfseinheit 30 in Schritt 140 bereits vorhanden ist.

Das im Schritt 112 erzeugte Ereignissignal wird in diesem Fall von dem Hintergrundprozeß 20 registriert, Schritt 146. Der Hintergrundprozeß 20 ruft daraufhin von dem Betriebssystem 14 die von diesem eingeholte Kennungsinformation 50 ab und prüft, ob die Kennungsinformation 50 in der Liste 22 enthalten ist, Schritt 148.

Ist das der Fall, führt der Hintergrundprozeß 20 unmittelbar Schritt 160 aus und veranlaßt das Betriebssystem 14 dazu, - durch Übersendung eines Steuersignals, wie zuvor beschrieben - den Modusschalter 44 der Hilfseinheit 30 anzusteuern, um die Hilfseinheit 30 in den hilfseinheitsspezifischen Betriebsmodus zu schalten. Die Hilfseinheit 30 ist daraufhin unmittelbar betriebsbereit, Schritt 190.

Ergibt die Prüfung in Schritt 150, daß die von der Hilfseinheit 30 übersandte Kennungsinformation 50 nicht in der Liste 22 enthalten ist, veranlaßt der Hintergrundprozeß 20 das Betriebssystem 14 dazu, die Anmelderoutine 18 zu starten und die Schritte 116 ff. auszuführen.

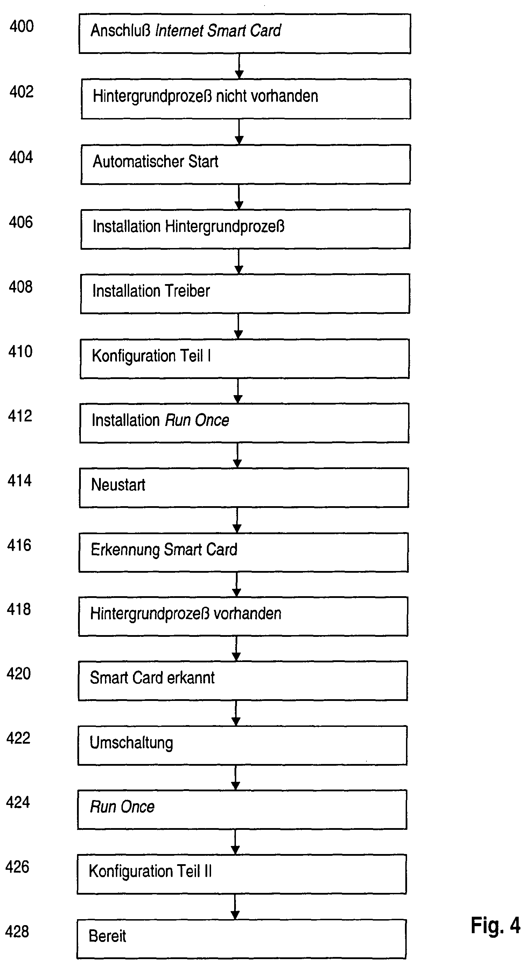

Fig. 4 bis 6 zeigen beispielhafte Abläufe für aufeinanderfolgende Inbetriebnahmen von unterschiedlichen Hilfseinheiten 30 an einem Computer 10. Bei dem in Fig. 4 dargestellten Ablauf wird davon ausgegangen, daß als Hilfseinheit 30 eine als Internetserver fungierende Chipkarte (*Internet Smart Card*) angeschlossen wird, bei deren erstmaligem Anschluß ein Neustart des Computers 10 erforderlich ist. Der Computer 10 sei weiter zum automatischen Start einer Anmelderoutine 18 eingerichtet und ein Hintergrundprozeß 20 sei noch nicht angelegt.

Der Ablauf setzt ein mit dem Anschluß der *Internet Smart Card* 30 an den Computer 10, Schritt 400. Nach Erkennen des Anschlusses stellt das Betriebssystem 14 des Computers 10 fest, daß ein Hintergrundprozeß 20 nicht vorhanden ist, Schritt 402; es startet deshalb automatisch die Ausführung der Anmeldroutine 18, Schritt 404. Durch diese werden von der *Internet Smart Card* 30 die benötigten Treiber installiert, Schritt 408, die Konfigurationseinstellugen, soweit möglich, vorgenommen, Schritt 410 und eine *Run Once-*Konfiguration installiert, Schritt 412. Danach wird die Hilfseinheit 30 neu gestartet, Schritt 414. Der Neustart erfolgt durch Zusendung eines Steuersignales, das die Umschaltung der Hilfseinheit 30 in den hilfseinheitenspezifischen Betriebsmodus bewirkt, Schritt 422.

Alternativ kann auch ein Neustart durch eine vorübergehende physische Trennung der Hilfseinheit 30 von dem Computer 10 erfolgen. In diesem Fall erkennt das Betriebssystem 14 wiederum den Anschluß einer Hilfseinheit 30 und stellt fest, daß ein Hintergrundprozeß 20 jetzt vorhanden ist, Schritt 418. Dieser erkennt nun die Hilfseinheit 30 als *Internet Smart Card* 30, Schritt 420, worauf das Betriebssystem die Umschaltung der *Internet Smart Card* 30 in ihren hilfseinheitsspezifischen Betriebsmodus bewirkt, Schritt 422.

Nach Umschaltung in den hilfseinheitsspezifischen Modus liest das Betriebssystem 14 die Konfigurationseinstellungen gemäß der *Run Once-*Konfiguration aus, Schritt 424, und schließt die Konfiguration ab, Schritt 426. Anschließend sind Computer 10 und Hilfseinheit 30 betriebsbereit.

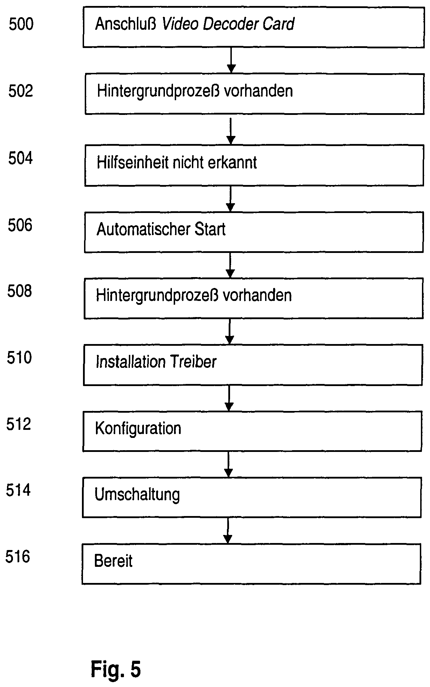

Fig. 5 zeigt den Ablauf einer Inbetriebnahme wenn an den Computer 10 nachfolgend als Hilfseinheit 30 erstmals eine Dekodierchipkarte (*Video Decoder Card*), wie sie etwa in Pay-TV-Receivern eingesetzt wird, angeschlossen wird. Der Anschluß der *Video Decoder Card* 30 erfordere keinen Neustart.

Der Ablauf setzt wiederum ein mit dem Anschluß der *Video Decoder Card* 30 an den Computer 10, Schritt 500. Dessen Betriebssystem 14 stellt nach Erkennen des Anschlusses nun fest, daß ein Hintergrundprozeß 20 bereits vorhanden ist, Schritt 502. Der Hintergrundprozeß 20 kann die als Hilfseinheit 30 angeschlossene *Video Decoder Card* allerdings nicht erkennen, da deren Kennungsinformation 50 sich nicht in der Liste 22 befindet, Schritt 504. Es erfolgt deshalb der automatische Start der Anmelderoutine 18, Schritt 506. Diese stellt fest, daß ein Hintergrundprozeß 20 vorhanden ist, Schritt 508, installliert von der *Video Decoder Card* 30 die benötigten Treiber, Schritt 510, und nimmt die von der *Video Decoder Card* 30 gelieferten Konfigurationseinstellungen vor, Schritt 512. Anschließend bewirkt das Betriebssystem 14 die Umschaltung der *Video Decoder Card* 30 in deren spezifischen Modus, womit Inbetriebnahme abgeschlossen und die *Video Decoder Card* 30 betriebsbereit ist, Schritt 516.

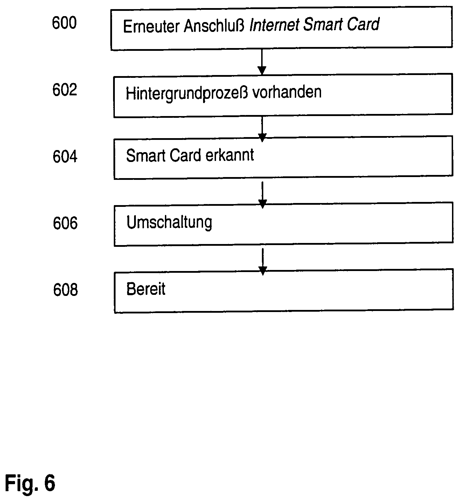

Fig. 6 zeigt den Ablauf einer Inbetriebnahme wenn an den Computer 10 im Anschluß an die *Video Decoder Card* erneut die *Internet Smart Card* gemäß Fig.4 angeschlossen wird.

Der Ablauf setzt dann wiederum mit dem Anschluß der *Internet Smart Card* 30 an den Computer 10 ein, Schritt 600. Dessen Betriebssystem 14 stellt jetzt nach Erkennen des Anschlusses fest, daß ein Hintergrundprozeß 20 bereits vorhanden ist, Schritt 602, der auch die Hilfseinheit 30 als *Internet Smart Card* 30 erkennt, Schritt 604. Das Betriebssystem 14 bewirkt daher unmittelbar die Umschaltung der *Internet Smart Card* 30 in deren spezifischen Betriebsmodus, Schritt 606, womit die *Internet Smart Card* 30 betriebsbereit ist, Schritt 608.

Im Rahmen des grundlegenden Ansatzes, für eine an einen Computer 10 anzuschließende, auf die Bereitstellung bestimmter benötigter Betriebsroutinen angewiesene Hilfseinheit 30 eine konsequente Master-Slave-Anordnung zu schaffen, indem auf dem Computer 10 ein ggf. von der Hilfseinheit 30 bereitgestellter Hintergrundprozeß 20 installiert wird, welcher anschließend durch Erkennen und Umschalten in den hilfseinheitenspezifischen Betriebsmodus eine schnelle Inbetriebnahme der Hilfseinheit 30 ermöglicht, sind eine Vielzahl von Ausgestaltungen sowohl des Verfahrens wie der zugrundegelegten Anordnung möglich. So können ohne weiteres Verfahrensschritte eingefügt werden, etwa zum Laden und Installieren weiterer zweckmäßiger Funktionen, optionale Programmschritte, wie etwa ein Neustart, zwingend durchgeführt werden, Verfahrensschritte, wie etwa die Prüfung einer Zeitfensterüberschreitung weggelassen, oder Verfahrensschritte zusammengefaßt werden, wie etwa die Registrierung des Anschlusses einer neuen Hilfseinheit und das Erkennen von deren Kennung. Da sie vor allem zur Veranschaulichung von Prinzipien dienen, sind weiter die Darstellungen in den Figuren keinesfalls als sklavisch verbindlich zu sehen. Der Erfindungserfolg läßt sich vielmehr auch bei Abweichungen von dem in den Figuren Gezeigten erzielen. Modifikationen können selbstverständlich erforderlich werden, wenn das Verfahren an Computern 10 mit anders als das hier zugrundegelegte Betriebssystem WINDOWS strukturierten Betriebssystemen eingesetzt werden sollen. Auf viele Weisen können ferner der Computer 10 und die Hilfseinheit 30 ausgestaltet sein.

## Patentansprüche

1. Verfahren zum Installieren einer Hilfseinheit (30) an einem Host-Computer (10), wobei die Hilfseinheit (30) dem Typ nach ein ressourcenbeschränkter Computer ist, der mit dem Host-Computer (10) nach dem "Master-Slave"-Prinzip zusammenarbeitet, wobei der Host-Computer (10) eine zum Anschluß der Hilfseinheit (30) geeignete Schnittstelle (12) aufweist und dazu eingerichtet ist, nach Erkennen des Anschlusses einer neuen Hilfseinheit (30) an die Schnittstelle (12) eine Anmelderoutine durchzuführen, innerhalb derer die Installation einer zum Betrieb der Hilfseinheit (30) benötigten Betriebsroutine (24) ausgeführt wird, nach deren Installation die Hilfseinheit (30) von einem Grundmodus in einen hilfseinheitsspezifischen Betriebsmodus umschaltbar ist, wobei die Betriebsroutine (24), wenn sie im Host-Computer (10) noch nicht vorhanden ist, zunächst von der Hilfseinheit (30) an diesen übertragen wird, **dadurch gekennzeichnet, daß** zur Feststellung, ob eine benötigte Betriebsroutine (24) übertragen werden muß, auf dem Host-Computer (10) ein Hintergrundprozeß (20) installiert wird, der bei Anschluß einer Hilfseinheit (30) prüft (148), ob eine von der Hilfseinheit (30) auf Anforderung durch den Host-Computer (10) rückübermittelte Kennungsinformation (50), sowie zugeordneter Betriebssystemroutine (24), in einer dem Hintergrundprozeß (20) zugeordneten Liste (22) in dem Host-Computer (10) bereits gespeichert ist, und daß der Hintergrundprozeß (20) die Hilfseinheit (30) durch Übersenden eins Steuersignals veranlaßt, in den hilfseinheitsspezifischen Betriebsmodus zu schalten (160), wenn die Kennungsinformation (50) in der Liste (22) enthalten ist.

2. Verfahren nach Anspruch 1, **dadurch gekennzeichnet, daß** der Hintergrundprozeß (20) von der Hilfseinheit (30) an den Computer (10) übertragen wird, wenn dieser nach Erhalt einer Kennungsinformation (50) von der Hilfseinheit (30) keine Aktivität eines Hintergrundprozesses (20) feststellt.

3. Verfahren nach Anspruch 2, **dadurch gekennzeichnet, daß** der Computer (10) die Übertragung des Hintergrundprozesses (20) von der Hilfseinheit (30) durch ein Steuersignal anfordert, wenn er das Fehlen eines Hintergrundprozesses (20) auf dem Computer (10) festgestellt hat.

4. Verfahren nach Anspruch 1, **dadurch gekennzeichnet, daß** der Computer (10) bei Erkennen einer neuen Hilfseinheit (30) ein Ereignissignal bereitstellt (112), das von dem Hintergrundprozeß (20) erkannt wird.

5. Verfahren nach Anspruch 1, **dadurch gekennzeichnet, daß** das Umschalten durch den Hintergrundprozeß (20) bewirkt wird, indem dieser ein Steuersignal an die Hilfseinheit (30) sendet, das die Hilfseinheit (30) von dem Computer (10) trennt.

6. Verfahren nach Anspruch 1, **dadurch gekennzeichnet, daß** das Laden und Installieren einer benötigten Betriebsroutine in den Computer (10) veranlaßt wird, wenn der Hintergrundprozeß (20) eine Kennungsinformation (50) nicht zuordnen kann.

7. Verfahren nach Anspruch 1, **dadurch gekennzeichnet, daß** bei Erkennen des Anschlusses einer neuen Hilfseinheit (30) eine Aufforderung an diese gesandt wird, Grundinformationen zur genauen Bezeichnung der Hilfseinheit (30), zu logischer Struktur und Beschaffenheit der Hilfseinheit (30), zu Funktionen der Hilfseinheit (30) und/oder zu Standarddaten einschließlich Routinginformationen zur Durchführung einer Anmelderoutine (18) an den Computer (10) zu übermitteln.

8. Verfahren nach Anspruch 1, **dadurch gekennzeichnet, daß** bei Anschluß einer Hilfseinheit (30) zunächst ein Installationsprogramm von der Hilfseinheit (30) an den Host-Computer (10) übertragen und auf dem Host-Computer (10) ausgeführt wird (121), welches anschließend seinerseits die benötigte Betriebsroutine (24) von der Hilfseinheit (30) ausliest und auf dem Host-Computer (10) installiert.

9. Verfahren nach Anspruch 8, **dadurch gekennzeichnet, daß** das Installationsprogramm nach Installation der Betriebsroutine (24) die Aussendung eines Steuersignals an die Hilfseinheit (30) bewirkt, das die Hilfseinheit (30) von dem Computer (10) trennt.

10. Verfahren nach Anspruch 8, **dadurch gekennzeichnet, daß** die Übertragung des Installationsprogrammes von der Anmelderoutine (18) bei Anschluß einer Hilfseinheit (30) veranlaßt wird.

11. Tragbarer Datenträger zur Ausführung eines Verfahrens gemäß Anspruch 1, mit einem Betriebssystem (34) zur Ausführung einer für den tragbaren Datenträger eigentümlichen Funktionalität sowie mit einem Emulator (36), der geeignet ist, den tragbaren Datenträger als Massenspeichereinheit gegenüber einem Computer (10) auszugeben, **dadurch gekennzeichnet, daß** in einem Speicher (46) ein Hintergrundprozeß (20) abgelegt ist, welcher nach Übertragung und Installation auf einem Computer (10) die Erkennung des tragbaren Datenträgers (30) mithilfe einer auf Anforderung durch den Host-Computer (10) rückübermittelten Kennungsinformation (50) bewirkt.

12. Tragbarer Datenträger nach Anspruch 12, **dadurch gekennzeichnet, daß** er als Chipkarte mit USB-Schnittstelle (32) ausgebildet ist.

13. Tragbarer Datenträger nach Anspruch 11, **dadurch gekennzeichnet, daß** in einem Speicher (46) ein Installationsprogramm abgelegt ist, das nach Übertragung und Installation auf einem Host-Computer (10) eine benötigte Betriebsroutine (24) von der Hilfseinheit (30) ausliest und auf dem Host-Computer (10) installiert.

## Claims

1. A method for installing an auxiliary unit (30) on a host computer (10), wherein, with respect to type, the auxiliary unit (30) is a resource-limited computer that cooperates with the host computer (10) in accordance with the "master-slave" principle, wherein the host computer (10) has an interface (12) suitable for connecting the auxiliary unit (30) and is adapted to carry out a registration routine upon detecting the connection of a new auxiliary unit (30) to the interface (12), within which registration routine the installation of an operating routine (24) required for operating the auxiliary unit (30) is executed, after the installation of which the auxiliary unit (30) is switchable from a basic mode to an auxiliary-unit specific mode, wherein the operating routine (24), if not yet present in the host computer (10), is first transmitted from the auxiliary unit (30) to the host computer,
**characterized in that**
for determining whether a required operating routine (24) has to be transmitted, on the host computer (10) a background process (20) is installed that, upon connecting an auxiliary unit (30), checks (148) whether identification information (50) and an associated operating system routine (24) transmitted back by the auxiliary unit (30) upon request by the host computer (10) is already stored in a list (22) associated with the background process (20) in the host computer (10), and that the background process (20) prompts the auxiliary unit (30) by sending a control signal to switch (160) to the auxiliary-unit specific operating mode if the identification information (50) is contained in the list (22).

2. The method according to claim 1, **characterized in that** the background process (20) is transmitted by the auxiliary unit (30) to the computer (10), if the latter detects no activity by a background process (20) after receipt of identification information (50) from the auxiliary unit (30).

3. The method according to claim 2, **characterized in that** the computer (10) requests the transmission of the background process (20) by the auxiliary unit (30) through a control signal if it has detected the absence of a background process (20) on the computer (10).

4. The method according to claim 1, **characterized in that** upon detecting a new auxiliary unit (30) the computer (10) supplies (112) an event signal which is recognized by the background process (20).

5. The method according to claim 1, **characterized in that** the switching is effected by the background process (20) by said background process sending a control signal to the auxiliary unit (30) that disconnects the auxiliary unit (30) from the computer (10).

6. The method according to claim 1, **characterized in that** the loading and installing of a required operating routine to the computer (10) is initiated if the background process (20) cannot correlate an identification information item (50).

7. The method according to claim 1, **characterized in that** upon detecting the connection of a new auxiliary unit (30) a request is sent to the latter to transmit to the computer (10) basic information on the exact designation of the auxiliary unit (30), on the logical structure and properties of the auxiliary unit (30), on functions of the auxiliary unit (30) and/or on standard data including routing information for carrying out a registration routine (18).

8. The method according to claim 1, **characterized in that** upon connecting an auxiliary unit (30), firstly an installation program is transmitted by the auxiliary unit (30) to the host computer (10) and is executed (121) on the host computer (10), said installation program in turn subsequently reading out the required operating routine (24) from the auxiliary unit (30) and installing it on the host computer (10).

9. The method according to claim 8, **characterized in that** after installing the operating routine (24) the installation program effects the emission of a control signal to the auxiliary unit (30) that disconnects the auxiliary unit (30) from the computer (10).

10. The method according to claim 8, **characterized in that** the transmission of the installation program is prompted by the registration routine (18) upon the connection of an auxiliary unit (30).

11. A portable data carrier for executing a method according to claim 1, having an operating system (34) for executing a functionality that this specific to the portable data carrier, and having an emulator (36) that is suitable to introduce the portable data carrier to a computer (10) as a mass memory unit, **characterized in that** in a memory (46) a background process (20) is deposited that, after transmission to and installation on a computer (10), effects the recognition of the portable data carrier (30) with the aid of an identification information item (50) transmitted back upon request by the host computer (10).

12. The portable data carrier according to claim 12, **characterized in that** it is arranged as a chip card with a USB interface (32).

13. The portable data carrier according to claim 11, **characterized in that** in a memory (46) an installation program is deposited that, after transmission to and installation on a host computer (10), reads out a required operating routine (24) from the auxiliary unit (30) and installs said routine on the host computer (10).

## Revendications

1. Procédé d'installation d'une unité auxiliaire (30) sur un ordinateur hôte (10), l'unité auxiliaire (30) étant du type ordinateur limité en ressources, lequel interfonctionne avec l'ordinateur hôte (10) selon le principe « maître-esclave », l'ordinateur hôte (10) comportant une interface (12) adaptée au raccordement de l'unité auxiliaire (30) et étant conçu pour, après reconnaissance du raccordement d'une nouvelle unité auxiliaire (30) à l'interface (12), effectuer une routine d'enregistrement à l'intérieur de laquelle l'installation d'une routine de fonctionnement (24) requise pour le fonctionnement de l'unité auxiliaire (30) est exécutée, après l'installation de laquelle l'unité auxiliaire (30) peut être commutée d'un mode de base en un mode de fonctionnement spécifique de l'unité auxiliaire, cependant que la routine de fonctionnement (24), quand elle n'est pas encore existante dans l'ordinateur hôte (10), est tout d'abord transférée de l'unité auxiliaire (30) à ce dernier, **caractérisé en ce que**, pour déterminer si une routine de fonctionnement requise (24) doit être transférée, un processus d'arrière-plan (20) est installé sur l'ordinateur hôte (10), lequel vérifie (148) lors du raccordement d'une unité auxiliaire (30) si une information d'identification (50) retransmise sur demande à partir de l'unité auxiliaire (30) par l'ordinateur hôte (10) ainsi que la routine de fonctionnement (24) y étant affectée est déjà mémorisée dans une liste (22) affectée au processus d'arrière-plan (20) dans l'ordinateur hôte (10), et **en ce que** le processus d'arrière-plan (20) amène l'unité auxiliaire (30), par l'envoi d'un signal de commande, à commuter (160) sur le mode de fonctionnement spécifique de l'unité auxiliaire si l'information d'identification (50) est contenue dans la liste (22).

2. Procédé selon la revendication 1, **caractérisé en ce que** le processus d'arrière-plan (20) est transféré de l'unité auxiliaire (30) à l'ordinateur (10) si ce dernier, après réception de l'information d'identification (50) de la part de l'unité auxiliaire (30) ne décèle pas d'activité d'un processus d'arrière-plan (20).

3. Procédé selon la revendication 2, **caractérisé en ce que** l'ordinateur (10) demande le transfert du processus d'arrière-plan (20) de la part de l'unité auxiliaire (30) par un signal de commande s'il a décelé la non-existence d'un processus d'arrière-plan (20) sur l'ordinateur (10).

4. Procédé selon la revendication 1, **caractérisé en ce que** l'ordinateur (10), en cas de reconnaissance d'une nouvelle unité auxiliaire (30), met à disposition (112) un signal d'événement qui est reconnu par le processus d'arrière-plan (20).

5. Procédé selon la revendication 1, **caractérisé en ce que** la commutation est engendrée par le processus d'arrière-plan (20), ce qui a lieu **en ce que** ce dernier envoie à l'unité auxiliaire (30) un signal de commande qui sépare l'unité auxiliaire (30) de l'ordinateur (10).

6. Procédé selon la revendication 1, **caractérisé en ce que** le chargement et l'installation d'une routine de fonctionnement requise dans l'ordinateur (10) est déclenché si le processus d'arrière-plan (20) ne peut pas affecter une information d'identification (50).

7. Procédé selon la revendication 1, **caractérisé en ce que**, en cas de reconnaissance du raccordement d'une nouvelle unité auxiliaire (30), un ordre est envoyé à cette dernière de transmettre à l'ordinateur (10) des informations de base sur la désignation précise de l'unité auxiliaire (30), sur la structure logique et la nature de l'unité auxiliaire (30), sur des fonctions de l'unité auxiliaire (30) et / ou sur des données standard y compris informations de routage pour la réalisation d'une routine d'enregistrement (18).

8. Procédé selon la revendication 1, **caractérisé en ce que**, en cas de reconnaissance du raccordement d'une unité auxiliaire (30), tout d'abord un programme d'installation est transféré de l'unité auxiliaire (30) à l'ordinateur hôte (10) et est exécuté (121) sur l'ordinateur hôte (10), lequel lit ensuite à son tour depuis l'unité auxiliaire (30) la routine de fonctionnement (24) requise et l'installe sur l'ordinateur hôte (10).

9. Procédé selon la revendication 8, **caractérisé en ce que** le programme d'installation engendre, après installation de la routine de fonctionnement (24), l'envoi d'un signal de commande à l'unité auxiliaire (30) qui sépare l'unité auxiliaire (30) de l'ordinateur (10).

10. Procédé selon la revendication 8, **caractérisé en ce que** le transfert du programme d'installation est déclenché par la routine d'enregistrement (18) en cas de raccordement d'une unité auxiliaire (30).

11. Support de données portable destiné l'exécution d'un procédé selon la revendication 1, ayant un système d'exploitation (34) pour l'exécution d'une fonctionnalité propre au support de données portable ainsi qu'un émulateur (36) adapté à faire passer le support de données portable pour une unité de mémoire de masse vis-à-vis d'un ordinateur (10), **caractérisé en ce que**, dans une mémoire (46), une processus d'arrière-plan (20) est stocké, lequel, après transfert et installation sur un ordinateur (10), engendre la reconnaissance du support de données portable (30) à l'aide d'une information d'identification (50) retransmise sur demande par l'ordinateur hôte (10).

12. Support de données portable selon la revendication 12, **caractérisé en ce qu'**il est réalisé sous forme de carte à puce avec interface USB (32).

13. Support de données portable selon la revendication 11, **caractérisé en ce que**, dans une mémoire (46), un programme d'installation est stocké, lequel, après transfert et installation sur un ordinateur hôte (10), lit depuis l'unité auxiliaire (30) une routine de fonctionnement (24) requise et l'installe sur l'ordinateur hôte (10).
